# EUROPEAN PATENT APPLICATION

(11) **EP 3 315 020 A1**
(43) Date of publication of application: **02.05.2018**
(21) Application number: 17198110.3
(22) Date of filing: 24.10.2017
(51) Int. Cl.: A01G 3/00

(54) **MACHINE FOR COLLECTING PRUNING RESIDUES**

(30) Priority: 28.10.2016 EP 16002302; 08.11.2016 IT 201600112118
(71) Applicant: Pennacchi, Luca Erik, 20153 Milano (IT)
(72) Inventor: Pennacchi, Luca Erik, 20153 Milano (IT)
(74) Representative: Rastelli, Franco

(57) **Abstract**

Self-propelled operating machine for collecting pruning residues from the ground, including a support frame (2), pick up and collection means (4), cutting and chipping means (5), mechanical dragging and transportation means (6) for dragging and guiding the pruning residues picked up by the pick up and collection means (4) up to said cutting and chipping means (5), a collecting box (8) and conveyor means (7) for conveying the minced material to said box (8). The pick up and collection means (4), said mechanical dragging and transport means (6) and said cutting and chipping means (5) are mounted on board of a secondary frame (13) supported by said support frame (2) so as to keep the mutual positioning during the operation of said operating machine (1) and said secondary frame (13) is rotatable so as to be tilting, with respect to said support frame (2) around an axis of rotation passing by the axis of rotation (Y-Y) of a roller of a cutting and chipping mill of the cutting and chipping means (5).

## Description

The invention relates to an operating machine, namely an agricultural machine, for collecting pruning residues, chipping them and discharging them into a machine box.

The need of carrying out various processing operations and tasks using dedicated machinery, to achieve shorter processing times and increased efficiency, is well known in agriculture.

Particularly referring to vineyards, pruning is one of the many tasks to be carried out on vines, and leads to a large amount of residues, namely vine shoots, which must be collected and removed from the ground to prevent such residues from building up on the ground and hinder the passage between rows of vines, or from adversely affecting vines' growth and grapes quality.

Manual collection and disposal of pruning residues from a row of trees, in vineyards or other crops, are time-consuming and accordingly expensive. Therefore, there is a need of collecting pruning waste, either vine shoots or other waste, using an agricultural machine that might speed-up and simplify processing.

Thus, agricultural machines for pruning waste collection are currently known in the art, which consist of trailers with means for collecting waste.

While these trailers can speed up collection of pruning waste as compared with manual collection, they still have drawbacks, especially in that a tractor with a trailed agricultural machine cannot move optimally along the rows of trees, particularly vines, namely due to the small width between the rows, generally not exceeding two meters, and that the space available to the tractor with the trailed machine annexed thereto is smaller than the space required by the latter.

Furthermore, the small width between the rows, in relation to their considerable length, requires the agricultural machine to be able to accumulate/store a large amount of pruning residues that have been picked up from the ground.

The problem of the present invention is to provide an operating machine for collecting pruning residues from the ground that is quick and efficient and also affords collection of pruning residues between rows of reduced width, thereby fulfilling the aforementioned needs and without incurring the above discussed drawbacks.

According to the invention, this problem is solved by the provision of an operating machine as defined in claim 1.

The characteristics of the machine of the present invention and the advantages that can be achieved by the use of such machine will be apparent from the following description of one or more embodiments of the operating machine, and namely the detailed description herein below is provided by way of example and without limitation with reference to the following figures, wherein:
- Figure 1 shows an exemplary schematic view of certain parts of the operating machine of the invention;
- Figure 2 shows a perspective view of the assembly comprising the means for collecting and picking up residues from the ground, the mechanical means for dragging and carrying the collected material and the cutting and chopping mill;
- Figure 3 shows a lateral plan view of the assembly of Figure 2;
- Figures 4 to 6 show distinct views of the assembly of Figure 3 in different conditions of use;
- Figure 7 shows a lateral plan view of the assembly of Figure 3 and
- Figures 8 to 10 show three distinct views of the cutting or chopping mill of Figure 7 in different conditions of use. An operating machine, namely an agricultural machine, according to the invention, is generally designated by numeral 1, which namely consists of an agricultural machine, which is designed to collect pruning residues, particularly vine shoots, as it moves along rows of trees, e.g. vines.

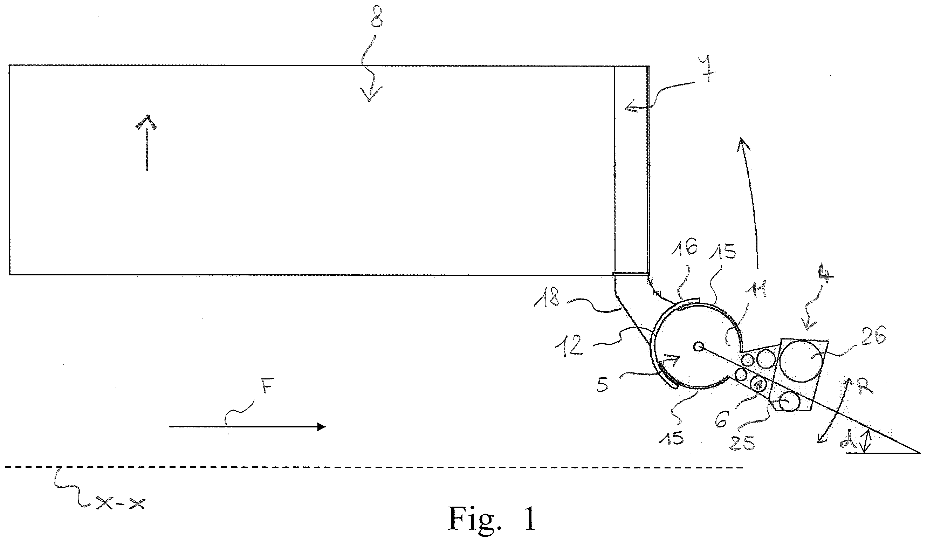

Preferably the machine 1 comprises:
- a support frame 2 with wheels 3 and/or tracks associated therewith for moving,
- pick-up and collection means 4 for picking up and collecting pruning residues from the ground,
- motor means mounted aboard the support frame 2 for said operating machine 1 to drive the mechanical parts of the operating machine 1 and to move forward as a self-propelled tractor in the direction of arrow F of Figure 1 along the working direction X-X;
- cutting and chipping means 5 for cutting and chipping pruning residues that have been picked up from the ground by said pick-up and collection means 4;
- mechanical dragging and carrying means 6 for dragging and guiding the pruning residues that have been picked up by the pick-up and collection means 4 to the aforementioned cutting and chipping means 5;
- a box 8 for accumulation of the material that has been chipped by the aforementioned cutting and chipping means 5;
- conveyor means 7, which are located in such position as to be able to convey and guide the material that has been cut and chipped by said cutting and chipping means 5 to said box and
- a driving workstation for an operator.

Referring to a forward working direction X-X of the operating machine 1, a front side and a rear side of the machine may be defined.

Preferably, the aforementioned pick-up and collection means 4 are situated at the aforementioned front side of the operating machine 1.

Preferably, the collection box 8 is located downstream from the pick-up and collection means 4.

Preferably, the cutting and chipping means 5 comprise a cutting and chipping mill 5 which comprises a roller 9 equipped with cutting and chipping members 14, said roller 9 being rotatably driven into rotation in a cylindrical case 10.

Preferably, the aforementioned cylindrical case 10 has a load opening 11 which is fed by the aforementioned mechanical dragging and carrying means 6 for the aforementioned cutting and chopping mill to be fed with the material to be cut and chipped.

Preferably, the aforementioned cylindrical case 10 has a discharge opening 12 in communication with the aforementioned conveyor means 7 for the cut and chipped material to be discharged from the cutting and chipping mill.

Preferably, the rotation of the aforementioned roller 9 equipped with cutting and chipping members in the cylindrical case 10 generates an airstream in the mill, which airstream may be ejected from the cylindrical case 10 through the aforementioned discharge opening 12, while dragging the material that has been cut and chipped in the cutting and chipping mill.

Preferably the aforementioned pick-up and collection means 4, the aforementioned dragging and carrying means 6, as well as the aforementioned cutting and chipping means 5 are mounted aboard a secondary frame 13 supported by said support frame 2, for the aforementioned parts to hold their positions relative to one another (including location, inclination and distance) during operation of the operating machine through various adjustments.

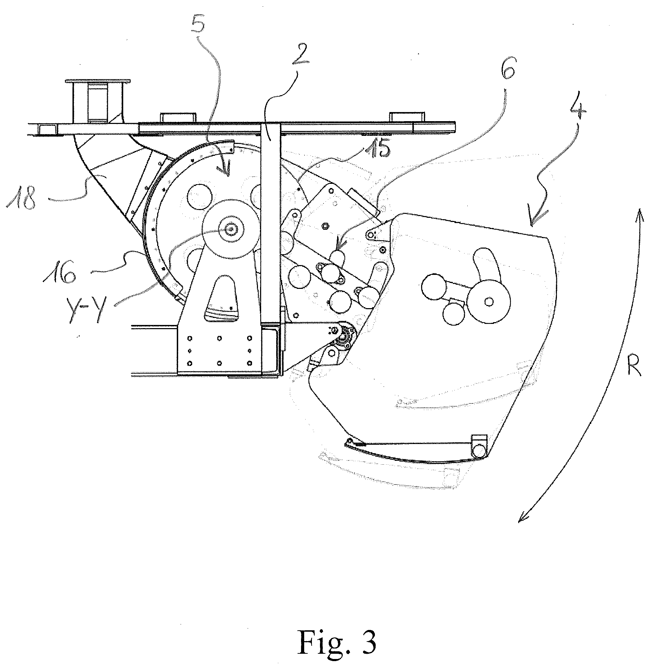

Preferably, the aforementioned secondary frame 13 is rotatable, following the curvilinear contour as shown by arrow R in Figures 1, 3 and 7 such that it may be tilted, relative to the support frame 2, about an axis of rotation Y-Y that coincides with the axis of rotation of the cutting and chipping mill.

According to the preferred embodiment as shown in the figures, the aforementioned assembly comprising the aforesaid pick-up and collection means 4, the aforementioned dragging and carrying means 6, as well as the aforementioned cutting and chipping means 5 mounted aboard the secondary frame 13 can be rotated through about 21° about the axis of rotation Y-Y with respect to the fixed frame 2.

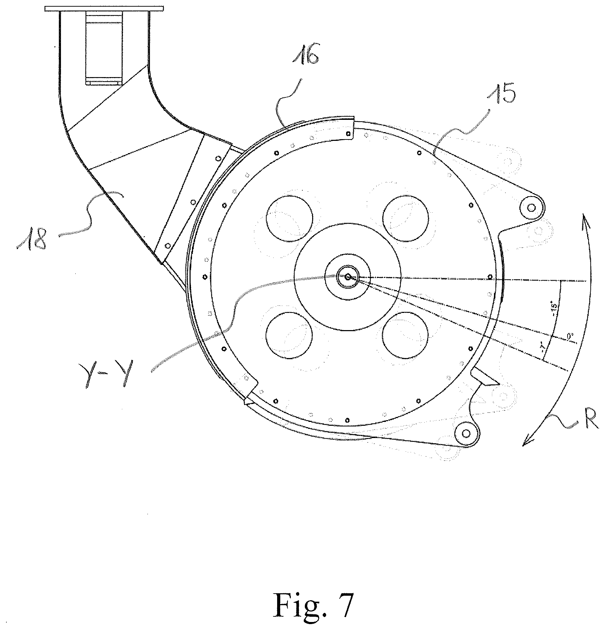

According to the embodiment of Figure 7, with respect to a zero position, the aforementioned assembly supported by the secondary frame 13 can be rotated in a range of -7° to +15° relative to the stationary frame 2.

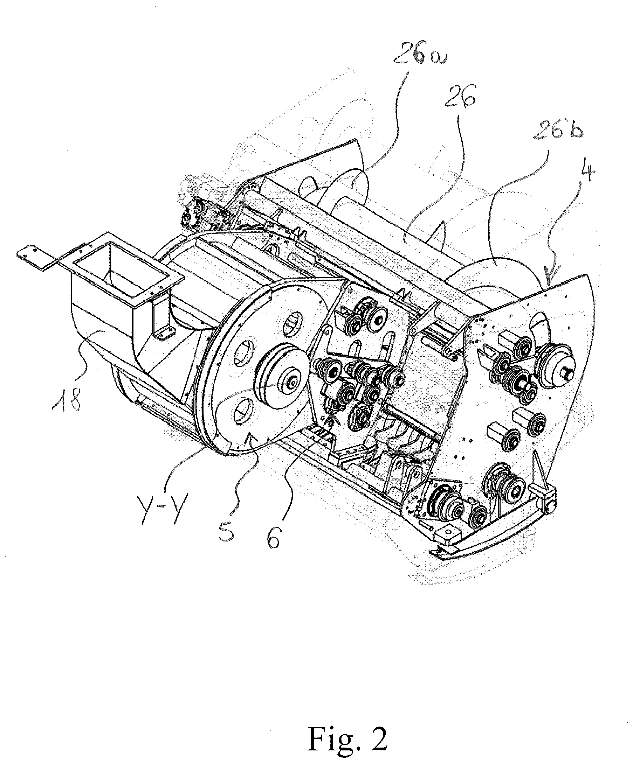

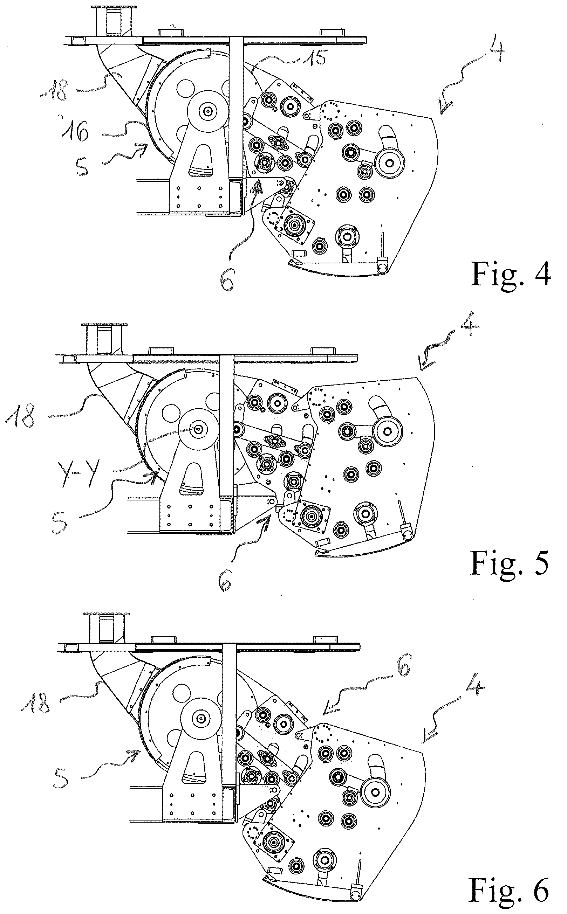

It shall be noted that Figures 2 to 6 only show the aforementioned assembly comprising the pick-up and collection means 4, the mechanical dragging and carrying means 6, as well as the aforementioned cutting and chipping means 5 mounted aboard the secondary frame 13, which is pivoted at Y-Y to the support frame 2, and particularly Figures 4, 6 and 7 show the aforementioned assembly in three respective different angular positions, with inclination angles of +15°, 0° and -7°.

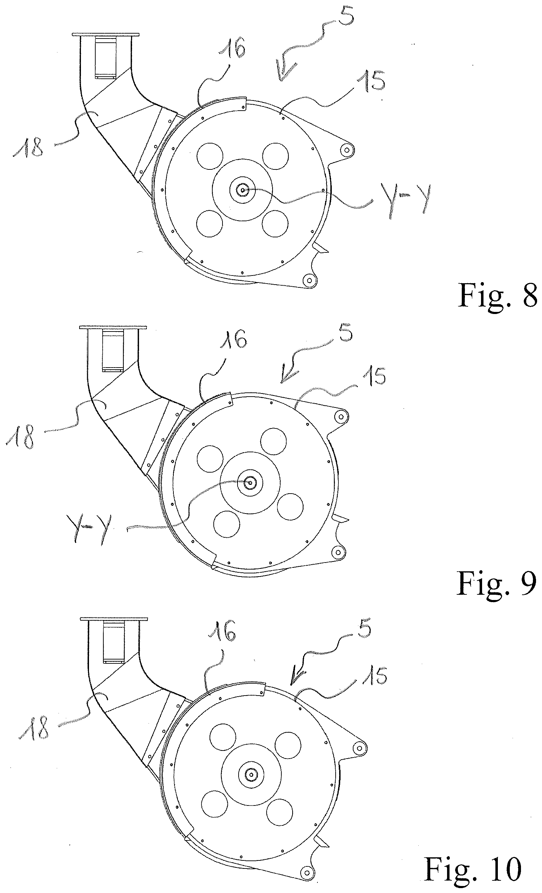

Conversely, Figures 7 to 10 only show the aforementioned cutting and chipping means 5, i.e. the cutting and chipping mill, mounted aboard the secondary frame 13 pivoted in Y-Y to the support frame 2 (particularly Figures 8, 90 and 10 show the aforementioned cutting and chipping mill in three respective different angular positions, with inclination angles of +15°, 0° and -7°. Preferably, the aforementioned cylindrical case 10 comprises a first portion 15 having a cylindrical shape, which is supported in rigidly joined fashion by the secondary frame 13 and a second portion 16 having a cylindrical shape, which is supported in rigidly joined fashion by the support frame 2, wherein the aforementioned first portion 15 and the aforementioned second portion 16 of the cylindrical case 10 are rotated relative to each other with respect to an axis of rotation Y-Y that passes through the axis of rotation of the roller 9 of the cutting and chipping mill.

Preferably, the aforementioned load opening 11 is formed in the cylindrical first portion 15 of the cylindrical case 10, while the aforementioned discharge opening 12 is formed in the aforementioned cylindrical second portion 16 of the cylindrical case 10.

Therefore, the aforementioned cylindrical second portion 16 of the second cylindrical case 10 forms a portion of the cutting and chipping mill, which is fixed relative to the support frame 2 as the tilt α of said secondary frame 13 changes relative to the support frame 2.

Preferably, the aforementioned discharge opening 12 of the cutting and chipping mill is equipped with a collector 18 for connection with a portion of the aforementioned conveyor means 7,.

Preferably, the box 8 is adapted to move between an operating position in which said box 8 is arranged to receive the material that has been cut and chipped and is being discharged from said discharge opening 12 of said cutting and chipping mill during normal operation of the operating machine 1, and a raised and/or tilted position, that said box 8 is designed to take when the cut and chipped material contained therein is to be discharged.

Preferably, the aforementioned conveyor means 7 comprise a tubular conduit that is rigidly joined to said box such that it will be movable with said box 8 as it moves between said operating position and said raised and/or tilted position.

According to a preferred and advantageous embodiment, the aforementioned tubular conduit that is rigidly joined to the box 8 extends in a protected position through a portion of the box 8, preferably through a front portion of said box 8, as shown in Figure 1.

Preferably, the operating machine 1 comprises first actuating means 19 for rotating the secondary frame 13 relative to the support frame 2 with respect to the aforementioned axis of rotation Y-Y, to change the tilt α of said secondary frame 13 relative to said support frame 2 and, at the same time, said pick-up and collection means 4, said mechanical dragging and carrying means 6 and said cutting and chipping means 5 mounted aboard said secondary frame 13.

Preferably, the operating machine 1 comprises:
- detection means 20 for detecting with the slope of the ground in front of said pick-up and collection means 4 of said operating machine 1 and
- means for changing the height/tilt of said pick-up and collection means 4 according to slope changes of the ground as detected by said detection means 20, as said operating machine moves forward.

Preferably the aforementioned detection means 20 for detecting the slope of the ground in front of the pick-up and collection means 4 of said operating machine 1 include at least one feeler pin 21 supported by a movable arm 22, said movable arm 22 being hinged to the support frame 2 to be able to move in a vertical direction relative to the support frame 2 and follow the slope of the ground as the operating machine 1 moves forward at a predetermined distance from the front side of the machine. For this purpose, the aforementioned arm 22 juts out of the front end of the operating machine 1 to extend beyond the aforementioned pick-up and collection means 4 along the forward working direction X-X of the operating machine.

Preferably, the aforementioned means for changing the height/tilt of said pick-up and collection means 4 comprise elements selected from the group comprising circuit breakers, hydraulic valve actuators, pneumatic valve actuators, switches, sensors and /or photocells.

Preferably, the operating machine 1 comprises material conveying means 23 for conveying the pruning residues in front of the operating machine as the operating machine moves forward, toward said pick-up and collection means 4.

Preferably the aforementioned material conveying means 23 comprise rotating brushes at opposite sides of said pick-up and collection means 4 in a more advanced position with respect to said pick-up and collection means 4. Alternatively, stationary rigid members may be provided, such as spoilers, cones and the like.

Preferably, the aforementioned pick-up and collection means 4 comprise:
- a rotating star roller 25 extending along the lower front side of said operating machine and
- an upper rotating roller 26 extending along the front side of said operating machine 1 above said rotating star roller 25,
wherein:
- said rotating star roller 25 and said upper rotating roller 26 are in contra-rotating relationship, to convey the material toward said mechanical dragging and carrying means 6 as the operating machine 1 moves forward in operation and
- said upper rotating roller 26 defines an outer profile that comprises two opposed half-screws 26a, 26b converging from the opposed leading ends of said upper rotating roller 26 toward a middle portion of said upper rotating roller 26.

Preferably, the aforementioned mechanical dragging and carrying means 6 include opposite holding and guiding rollers, which may be motorized rollers, that define a conduit there between for the pruning residues picked up by said pick-up and collection means 4.

Preferably, the operating machine 1 comprises lifting means for changing the height of said support frame 2 from the ground, relative to said wheels (3) and/or tracks for moving.

Preferably, the operating machine 1 of the invention has an overall width that does not exceed 150 cm.

The above described agricultural operating machine can fulfill the aforementioned needs, as it can both collect pruning residues and cut and chip them to the desired size, for use as chips or biomass of other types.

The operating machine of the invention can adjust the height of the pruning residue pick-up and collection means from the ground, to suit particular operation requirements, whereby they can fit soils of different types and can additionally be dynamically adjusted in height as the operating machine moves forward, to cope with sudden changes in the ground due to bumps or depressions.

Since the machine is characterized by including a cutting and chipping mill with a discharge opening at a fixed height, the cutting and chipping mill also having the feature of being able to change its tilt α relative to the load-bearing frame of the machine and its accumulation box, said conveyor means may be arranged to be stationary relative to the box, which will prevent the conveyor means from being movable, particularly in terms of tilt. By this arrangement, the conveyor means may be accommodated and embedded in the load-bearing structure of the box, and the maximum size of the box may be increased, as there will be no need to account for any interference of the conveyor means with the box in response to a changing inclination of the cutting and chipping mill, and the movable secondary frame relative to the stationary frame. Furthermore, by adjusting the height of the support frame from the ground, the machine may be easily carried and stored in warehouses when it does not necessarily have to be at a great height from the ground.

Additional variations can be envisaged for the operating machine as described above without departure from the scope of the patent.

## Claims

1. Operating machine (1) for collecting pruning residues, particularly shoots, from the ground, especially along rows of a vineyard or other crops, including:
- a support frame (2) to which wheels (3) and/or advancement tracks are associated,
- pick up and collection means (4) for picking up and collecting pruning residues from the ground,
**characterized in that** said operating machine (1) comprises:
- motor means mounted on board of said support frame (2) for allowing said operating machine (1) to move the mechanical components of said operating machine (1) and to advance as a self-propelled tractor along the working direction;
- cutting and chipping means (5) for cutting and chipping pruning residues collected from the ground by said pick up and collection means (4);
- mechanical dragging and transportation means (6) for dragging and guiding the pruning residues picked up by the pick up and collection means (4) up to said cutting and chipping means (5);
- a box (8) for accumulating the material minced by said cutting and chipping means (5);
- conveyor means (7) positioned for conveying and guiding from said cutting and chipping means (5) to said box (8) the material cut and minced by said cutting and chipping means (5);
- a driving workstation for an operator, wherein,
- with respect to an advancement working direction (X-X) of said operating machine (1), in said operating machine (1) there being defined a front and a back side respectively;
- said pick up and collection means (4) are positioned at said front side of the operating machine (1);
- said collection box (8) is positioned downstream of said pick up and collection means (4) with respect to said pick up and collection means (4);
- said cutting and chipping means (5) include a cutting and chipping mill including a roller (9) provided with cutting and chipping elements (14) rotatably actuated in rotation in a cylindrical casing (10);
- said cylindrical casing (10) is provided with a loading opening (11) fed by said mechanical dragging and transport means (6) to allow the loading of the material to be cut and minced in said cutting and chipping mill;
- said cylindrical casing (10) is provided with an unloading opening (12) in communication with said conveyor means (7) to allow the unloading of material cut and minced from said cutting and chipping mill;
- said pick up and collection means (4), said mechanical dragging and transport means (6) and said cutting and chipping means (5) are mounted on board of a secondary frame (13) supported by said support frame (2) so as to keep the mutual positioning during the operation of said operating machine (1),
- said secondary frame (13) is rotatable so as to be tilting, with respect to said support frame (2) around an axis of rotation passing by the axis of rotation (Y-Y) of said roller of said cutting and chipping mill.

2. Operating machine according to claim 1, wherein:
- said secondary frame (13) is tilting/rotatable, with respect to said support frame (2) around an axis of rotation (Y-Y) passing by the axis of rotation of said roller (9) of said cutting and chipping mill;
- said cylindrical casing (10) includes a first portion (15) with cylindrical shape integrally supported by said secondary frame (13) and a second portion (16) with cylindrical shape integrally supported by said support frame (2), said first portion (15) and said second portion (16) of said cylindrical casing (10) being mutually rotatable with respect to each other with respect to a rotation axis (Y-Y) passing by the axis of rotation of said roller (9) of said cutting and chipping mill;
- said loading opening (11) is formed in said first portion (15) with cylindrical shape of said cylindrical casing (10) and
- said unloading opening (12) is formed in said second portion (16) with cylindrical shape of said cylindrical casing (10),
said second portion (16) with cylindrical shape of said cylindrical casing (10) constituting a portion of said cutting and chipping mill that remains fixed with respect to said support frame (2) upon the variation of the inclination (α) of said secondary frame (13) with respect to the support frame (2).

3. Machine according to claim 2, wherein said unloading opening (12) of said cutting and chipping mill is provided with a collector (18) for fitting with a portion of said conveyor means (7).

4. Machine according to claim 1, 2 or 3, wherein:
- said box (8) is movable between an operating position, in which said box (8) is positioned for receiving the cut and chipping material unloaded from said unloading opening (12) of said cutting and chipping mill during normal operation of the operating machine (1), and a raised and/or tilted position in which said box (8) is moved to unload the cut and material contained therein;
- said conveyor means (7) include a tubular conduit fixed with said box to be movable with said box (8) when moving between said operating position and said raised and/or tilted position.

5. Machine according to claim 4, wherein said tubular conduit fixed with said box (8) extends in a protected position through a portion of said box (8), preferably through a front portion of said box (8) .

6. Machine according to any one of claims 1 to 5, including first actuation means (19) for moving in rotation said secondary frame (13) with respect to said support frame (2) with respect to said axis of rotation (Y-Y), so as to change the inclination (α) (13) with respect to said support frame (2) of said secondary frame and, at the same time, of said pick up and collection means (4), of said mechanical dragging and transport means (6) and of said cutting and chipping means (5) mounted on board of said secondary frame (13).

7. Machine according to any one of claims 1 to 6, comprising:
- detection means (20) for detecting the slope of the ground in front of said pick up and collection means (4) of said machine and
- means for changing the height/inclination of said pick up and collection means (4) as a function of a change in the slope of the ground detected by said detection means (20) during advancement of said operating machine.

8. Machine according to claim 7, wherein said detection means (20) for detecting the slope of the ground in front of said pick up and collection means (4) of said operating machine (1) include at least one feeler pin (21) supported by a movable arm (22), said movable arm (22) being hinged to said support frame (2) for being movable in a vertical direction, said arm (22) projecting from the front end of said operating machine (1) so as to jutting out said pick up and collection means (4) in said advancement working direction (X-X) of said operating machine (1) .

9. Machine according to claim 8, wherein said means for changing the height/inclination of said pick up and collection means (4) include elements selected from the group comprising switches, hydraulic valve actuators, pneumatic valve actuators, switches, sensors and/or photocells.

10. Machine according to any one of claims 1 to 9, including material conveying means (23) for conveying towards said pick up and collection means (4) pruning residues present in front of the operating machine during the advancement of the operating machine itself.

11. Machine according to claim 10, wherein said material conveying means (23) include rotating brush placed at opposite sides of said pick up and collection means (4) in a frontally more advanced position with respect to said pick up and collection means (4).

12. Machine according to any one of claims 1 to 11, wherein said pick up and collection means (4) include:
- a rotating star roller (25) extended along the lower front side of said operating machine, and
- an upper rotating roller (26) extended along the front side of said operating machine (1) above said rotating star roller (25),
wherein:
- said rotating star roller (25) and said upper rotating roller (26) are counter-rotating so as to convey the material towards said mechanical dragging and transport means (6) during the advancement working movement of the operating machine (1), and
- said upper rotating roller (26) defines an external profile including two opposite half-screws converging from the opposite head ends of said upper rotating roller (26) towards a median portion of said upper rotating roller (26).

13. Machine according to any one of claims 1 to 12, wherein the mechanical dragging and transport means (6) include opposite containment and guide rollers which define a conduit there between for the pruning residues picked up by said pick up and collection means (4).

14. Machine according to any one of claims 1 to 13, including lifting means for changing the height of said support frame (2) from the ground with respect to said wheels (3) and/or advancement tracks.

15. Machine according to any one of claims 1 to 14, having an overall width not greater than 150 cm.
